Europäisches Patentamt

European Patent Office

Office européen des brevets

(19)

(11) **EP 1 441 463 A1**

(12) **EUROPEAN PATENT APPLICATION**

(43) Date of publication:
**28.07.2004 Bulletin 2004/31**

(51) Int Cl.⁷: **H04L 7/04**

(21) Application number: **03029653.7**

(22) Date of filing: **23.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 CN 03115108**

(71) Applicant: **ALCATEL**
**75008 Paris (FR)**

(72) Inventors:
• **Guangjie, Li, CTO Alcatel Shanghai Bell Co., Ltd.**
  **Pudong Jinqiao 201206 Shanghai (CN)**
• **Pengpeng, Song,**
  **CTO Alcatel Shanghai Bell Co. Ltd.**
  **Pudong Jinqiao 201206 Shanghai (CN)**

(74) Representative:
**Dreiss, Fuhlendorf, Steimle & Becker**
**Patentanwälte,**
**Postfach 10 37 62**
**70032 Stuttgart (DE)**

(54) **A method and device for carrier frequency synchronization**

(57)    A method, as well as the transmitter and receiver to implement it, for carrier frequency synchronization in digital communication system, comprising the following steps and corresponding devices: at the transmitter, inserting a special PN sequence every a segment of communication signals digitally modulated and then transmitting them; wherein special PN sequences are $C = R(v \otimes u)$; at the receiver the down-converted base band signals which contain special PN sequences are match filtered to output P complex signals containing frequency offset; transforming the P complex signals into frequency domain by FFT with likelihood function to find coarse point $\Omega_0$ with maximum amplitude; searching spectrum in the small range of $\Omega_0-1$ to $\Omega_0+1$ with more accuracy by Chirp-Z transform to obtain point increment information $\Omega_1$; finding the point increment $\Omega$ of the accurate point with maximum amplitude by quadratic interpolation on $\Omega_1$; calculating frequency offset according to equation

$$\hat{f} = \frac{f_s \cdot (\hat{\Omega} + \Omega_0 - M \cdot P/2)}{K \cdot M \cdot P};$$

using frequency offset $\hat{f_e}$ to control the frequency of the oscillator to vary according to $f_e$ to implement frequency synchronization.

Figure 1

EP 1 441 463 A1

## Description

## Background of the Invention

### 1. Technical Field

This invention relates to digital communication, especially to a method for carrier frequency synchronization in digital communication system as well as the transmitter and receiver to implement this method.

### 2. Description of the Related Art

Traditional solutions for carrier frequency synchronization include PN based solution, pilot based solution, preamble based solution etc. For PN based solution, it must correlate the received signal with local PN sequence, and differential method is used to estimate the frequency offset. The complexity is very high, and the performance of differential method is not good. Traditional carrier frequency synchronizer has a match filter to correlate the received signal with local known sequence. Traditional match filter has the FIR structure, the number of whose taps is the same as the length of PN sequence. The system function of traditional match filter in z domain can be expressed as

$$H(z) = \sum_{i=0}^{N-1} c_{N-1-i} \cdot z^{-i} \ .$$

The traditional match filter has a very high complexity for long PN sequence, because it entails N multiplications and additions every sample, which makes it difficult for hardware implementation.

## Summary of the Invention

This invention intends to overcome said problems. The object is to provide a new method for carrier frequency synchronization in digital communication system, and the transmitter and receiver for implementing the said method. The method, which is of low computational complexity, can simplify the structure of match filter in the receiver and improve the synchronization accuracy. At the transmitter, special PN sequences are generated among transmitted signals and transmitted. At the receiver they are transformed and transferred to the match filter. When the peak occurs, it will output several complex signals containing frequency offset information. Afterwards, technique based on maximum likelihood (ML), Chirp-Z transform and quadratic interpolation method is used to calculate the frequency offset $f_e$, which is used to control the high frequency oscillator, adjusting it to vary according $f_e$ to gain carrier frequency synchronization.

The method of this invention for carrier frequency synchronization in digital system comprises the following steps:

a) At the transmitter, a special PN sequence is inserted every a segment of communication signals digitally modulated and than is transmitted with the communication signals, and the special PN sequence is $C=R(v \otimes u)$ wherein R is constant, **u** and **v** are two PN sub sequences, and $\otimes$ represents the Kronecker product;

b) At the receiver, down converted base signals containing said special PN sequences are match filtered to output P complex signals containing frequency offset, wherein P corresponds to the length of said sub sequence **v**;

c) Transform the P complex signals into frequency domain by FFT using likelihood function and search in frequency domain for the coarse point $\Omega_0$ with max amplitude;

d) Search spectrum in the small range of $\Omega_0$-1 to $\Omega_0$+1 with more accuracy by Chirp-Z transform to obtain point increment information $\Omega_1$;

e) Find the point increment $\hat{\Omega}$ of the accurate point with maximum amplitude by quadratic interpolation upon the point increment information $\Omega_1$ ;

f) Calculate a frequency offset with equation

$$\hat{f}_e = \frac{f_s \cdot (\hat{\Omega}+\Omega_0 - M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**;

g) Use the frequency offset $\hat{f}_e$ to control a high frequency oscillator, making it vary according to $\hat{f}_e$ to implement carrier frequency synchronization. The transmitter in digital communication system of this invention includes the digital modulator, which communication signals digitally modulates, and the radio front end to transmit these communication signals, also comprising:

PN sequence generator to generates particular sequence $C = R(v \otimes u)$, wherein R is constant, v and u are two PN sub sequences and $\otimes$ represents the Kronecker product;

Multiplexer between said digital modulator and said radio front end, which inserts particular PN sequence C every several modulated communication signals.

The receiver in digital communication system of this invention includes the down converter that down converts received signals, timing synchronizer for the timing synchronization of the converted signals, and the high frequency oscillator that generates high frequency oscillation for said down converter; also comprising:

The match filter for down converted base band signals that contain particular PN sequence $C = R(v \otimes u)$, wherein R is constant, v and u are two PN sub sequences and $\otimes$ represents the Kronecker product; said match filter outputs P complex signals containing the frequency offset, wherein P is the length of said sub sequence v;

The device that transforms the P complex signals into frequency domain by FFT using likelihood function and search in frequency domain for the coarse point $\Omega_0$ with max amplitude;

Point increment information calculation device, which searches spectrum in the small range of $\Omega_0$-1 to $\Omega_0$+1 with more accuracy by Chirp-Z transform to find the point increment information $\Omega_1$;

Accurate point increment calculation device, which finds the point increment $\hat{\Omega}$ of the accurate point with maximum amplitude by quadratic interpolation upon the point increment information $\Omega_1$;

Frequency offset calculation device which calculates frequency offset $f_e$ with equation

$$\hat{f}_e = \frac{f_s \cdot (\hat{\Omega} + \Omega_0 - M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**; said frequency offset calculation device outputs frequency offset $f_e$ to control the high frequency oscillator, making it vary according to $f_e$ to implement carrier frequency synchronization.

The method according to this invention makes the calculation of frequency offset easy□accurate and very practical. The match filter of this invention can save 88% multiplication units as comparison to the traditional match filter, thus can implement timing synchronization and channel estimation more effectively. The match filter of this invention is composed of two cascaded match filters and compared with traditional match filter the structure of this match filter is greatly simplified.

**Brief Description of Drawings**

Figure 1 shows parts of the block diagram of the transmitter and receiver in an embodiment of this invention;

Figure 2 shows the block diagram of the match filter in an embodiment of this invention;

Figure 3 shows the simulation curve of this invention vs. that of differential method in AWGN channel;

Figure 4 shows the simulation curve of this invention vs. that of differential method in multi-path fading channel.

**Description of the Embodiment**

The following presents a detailed description of this invention combining with the embodiment shown in appended drawings.

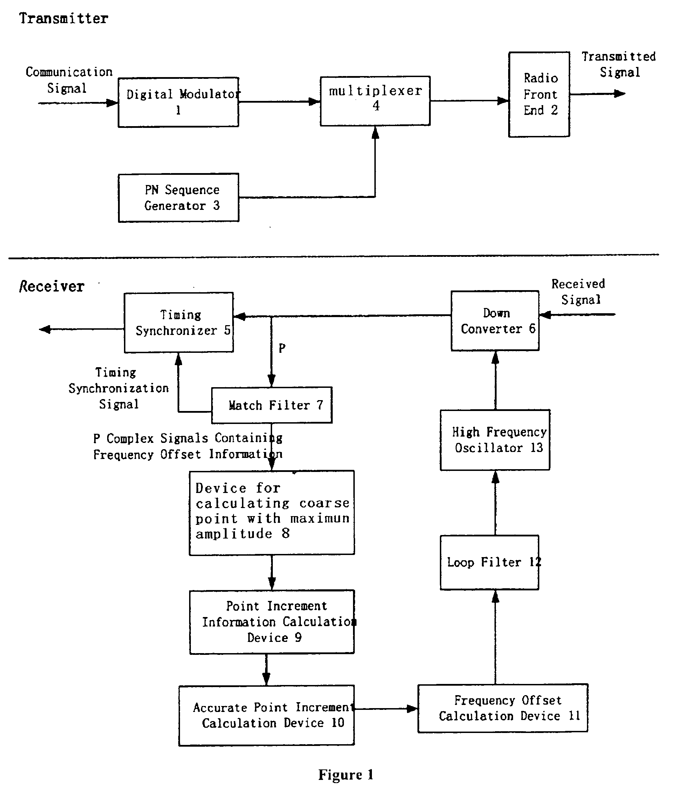

As shown in figure 1, the upper part above the dashed is a part of the block diagrams of the transmitter in a communication device. A PN sequence generator 3 and multiplexer 4, which are modified by this invention, are inserted in the transmitter between digital modulator 1 and radio front end 4, which serve as existing technical parts. Other parts of the transmitter are of existing technologies. Therefore illustration and description are not mentioned here.

The part below the dashed in figure 1 shows part of the block diagrams of the receiver in another communication device (namely the communication device of another end), wherein timing synchronizer 5, down converter 6, high frequency oscillator 13 and loop filter 12 are existing technologies; while match filter 7, device for calculating coarse point with maximum amplitude 8, point increment information calculation device 9, accurate point increment calculation device 10 and frequency offset calculation device 11 are the modified parts by this invention. Other parts of the receiver are of existing technologies and don't correlate to the modified parts of this invention directly, therefore no illustration or description is given here.

The method for frequency synchronization of this invention, firstly generates particular PN sequences at the transmitter, then inserts one of these PN sequences every a segment of communication signals digital modulated and then transmits them; the PN sequences are $C=R(v \otimes u)$ wherein R is constant, v and u are two PN sequences and $\otimes$ represents the Kronecker product.

For such PN sequences, Primary Synchronization Code (PSC) in WCDMA is a particular example for this kind of sequence. In the example, select R=I + j, and the two sub PN sequences of PSC code are $u$ = (1,1,1,1,1,1,-1,-1,1,-1,1,-1,1,-1,-1,1) and $v$ = (1,1,1,-1,-1,1,-1,-1,1,1,1,-1,1,-1,1,1) . Substituting v into C, the PSC code can be expressed as:

$$C=(1+j)(v \otimes u)=(1+j)(u,u,u,-u,-u,u,-u,-u,u,u,u,-u,u,-u,u,u),$$

which has the length of 256.

Synchronizer of existing technology has a match filter to correlate the received signal with local known sequence. Traditional match filter has the FIR structure, the number of whose taps is the same as the length of PN sequence. The output of traditional match filter is:

$$y_k = \sum_{i=0}^{N-1} r_{k-i} \cdot c_{N-i} \ ,$$

wherein $y_k$ is the output at time $k$ and $c_l$ is value of tap $l$, the sequence of tap value is the conjugate of the transmitted PN sequence **C**. The system function in z domain can be expressed as

$$H(z) = \sum_{i=0}^{N-1} c_{N-1-i} \cdot z^{-i} \ .$$

The traditional match filter has a very high complexity for long PN sequence, because it entails N multiplications and additions every sample, which makes it difficult for hardware implementation.

But for such PN sequences in this invention, the structure of match filter can be greatly simplified. Here we define the length of **C** is $N$, two sub PN sequence **u** and **v** have the length $K$ and $P$ ($N=K \times P$). $u_i$ and $v_i$ represent the ith element of **u** and **v** respectively. The system function of match filter in z domain can be deduced as following according to the PN structure.

$$H(z) = \sum_{i=0}^{N-1} c_{N-1-i} \cdot z^{-i} = \sum_{i=0}^{K-1} c_{N-1-i} \cdot z^{-i} + \sum_{i=K}^{2K-1} c_{N-1-i} \cdot z^{-i} + \sum_{i=2K}^{3K-1} c_{N-1-i} \cdot z^{-i} + \cdots + \sum_{i=(P-1)K}^{P \times K-1} c_{N-1-i} \cdot z^{-i}$$

$$= v_{P-1} \sum_{i=0}^{K-1} u_{K-1-i} \cdot z^{-i} + v_{P-2} \sum_{i=K}^{2K-1} u_{K-1-i} \cdot z^{-i} + v_{P-3} \sum_{i=2K}^{3K-1} u_{K-1-i} \cdot z^{-i} + \cdots + v_0 \sum_{i=(P-1)K}^{P \times K-1} u_{K-1-i} \cdot z^{-i}$$

$$= v_{P-1} \cdot z^0 \sum_{i=0}^{K-1} u_{K-i} \cdot z^{-i} + v_{P-2} \cdot z^{-K} \sum_{i=0}^{K-1} u_{K-i} \cdot z^{-i} + v_{P-3} \cdot z^{2K} \sum_{i=0}^{K-1} u_{K-i} \cdot z^{-i} + \cdots + v_0 \cdot z^{K-1} \sum_{i=0}^{K-1} u_{K-i} \cdot z^{-i}$$

$$= (v_{P-1} \cdot z^0 + v_{P-2} \cdot z^{-K} + v_{P-3} \cdot z^{2K} + \cdots + v_0 \cdot z^{(P-1)K}) \cdot \sum_{i=0}^{K-1} u_{K-i} \cdot z^{-i} = \sum_{i=0}^{K-1} u_{K-1-i} \cdot z^{-i} \cdot \sum_{i=0}^{P-1} v_{P-1-i} \cdot z^{-i \cdot K}$$

$$= H_u(z)H_v(z^K)$$

$$(1)$$

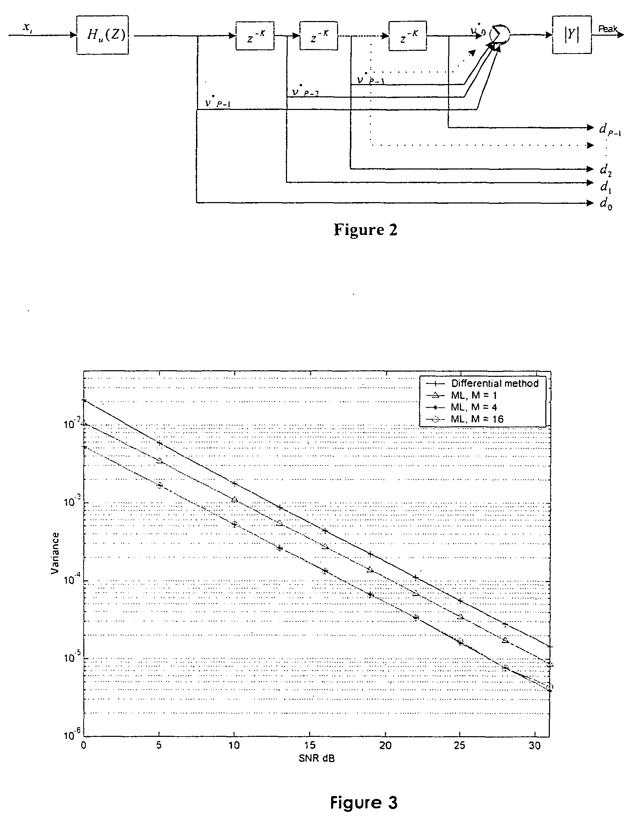

Equation (1) demonstrates that the traditional match filter can be divided into two cascaded match filters to correlate the short sub PN sequences respectively. This transform can reduce the number of taps from $N$ to $K+P$, thus save the multiplication units, for example, from 256 to 32 when $N = 256$ and $K=P=16$. The structure of modified match filter is depicted in Fig 2.

In figure 2 P complex data $d_0,..,d_{P-1}$ containing the information of frequency offset is generated while match filter correlates the received signal, concretely correlates the signal output from the down converter of the receiver. In the following section, the frequency offset will be estimated from these data. Furthermore the peak output of the match filter is used as timing synchronization signal for the timing synchronizer in the receiver.

In traditional solution differential method is used to estimate the relative frequency offset $\hat{f}_e$, the detection metric is given by

$$V = \sum_{l=0}^{P-2} d_l \cdot d_{l+1}^* ,$$

and $\hat{f}_e$ can be estimated by the phase of $V$.

In this solution, frequency estimation via approximate ML estimation is used to get more accuracy than differential method. The approximate likelihood function can be defined as

$$\Gamma(\varepsilon_k) = \left| \sum_{l=0}^{N_{FFT}} d_l \cdot e^{-j2\pi \cdot l \cdot \varepsilon_k \cdot K / N_s} \right|$$

$$(2)$$

Likelihood function in (2) can be calculated by Fast Fourier Transform (FFT) for discrete estimation. The length of FFT is defined as $N_{FFT}$, which should be bigger than $P$ (other data can be zero padded).

$$y = (y_0, y_1, \cdots, y_{NFFT-1}) = DFT(d_0, d_1, \cdots d_{P-1}, 0, 0, \cdots 0)$$

$$(3)$$

The detection metric of the coarse point with maximum amplitude is given by

$$\Omega_0 = \arg\max_j |y_j|$$

$$(4)$$

And relative frequency offset can be estimated by

$$\hat{f}_e = \frac{f_s \cdot (\Omega_0 - N_{FFT}/2)}{K \cdot N_{FFT}}$$

$$(5)$$

The relative frequency resolution is $\Delta f_e = f_s/(K \cdot N_{FFT})$, wherein $f_s$ is the chip rate of PN sequences.

From (3) (4) (5), we get to know that big $N_{FFT}$ must be used in order to get more accuracy, however, which will result in much more implementation complexity. In order to get more accuracy with low complexity, we use the Chirp-Z transform and quadratic interpolation method, viewing that searching the maximum point in spectrum can be achieved in two steps: first finding the coarse maximum point with short $N_{FFT}$ and then intensively searching around this point for higher accuracy. The proposed scheme lowers the computational complexity while keeping the accuracy. The procedure to search the accurate point with maximum amplitude by Chirp-Z transform and quadratic interpolation consists of the following steps:

Conduct Chirp-Z transform in the small range of $\Omega_0$ -1 to $\Omega_0$+1, here we divide the range into 2M pieces; Select L to be $L=2^m > P+2M$,

$$W = e^{j\frac{2\pi}{N.M}},$$

generate sequence $h_L(n)$ by

$$h_L(n) = \begin{cases} W^{-n^2/2}, & 0 \le n \le 2M-2 \\ W^{-(n-L)^2/2}, & 2M-2 \le n \le L-1 \end{cases} \tag{6}$$

$$H(k) = FFT[h_L(n)], \qquad 0 \le k \le L-1 \tag{7}$$

$$y(n) = \begin{cases} d_n \cdot e^{-j2\pi(\Omega_0-1)n/P} \cdot W^{-n^2/2}, & 0 \le n \le P-1 \\ 0, & P \le n \le L-1 \end{cases} \tag{8}$$

$$Y(k) = FFT[y(n)], \qquad 0 \le k \le L-1 \tag{9}$$

$$V(n) = IFFT[Y(k) \cdot H(k)], \qquad 0 \le n \le L-1 \tag{10}$$

$$X(k) = V(k) \cdot W^{k^2/2}, \qquad 0 \le k \le 2M-1 \tag{11}$$

Frequency offset Metric is

$$\Omega_1 = \arg\max_k |X(k)|, \qquad 0 \le k \le 2M-1 \tag{12}$$

$$\text{Quadratic interpolation} \quad \hat{\Omega} = \Omega_1 + \left[ \frac{3 \cdot |X(\Omega_1-1)| - 4 \cdot |X(\Omega_1)| + |X(\Omega_1+1)|}{2 \cdot |X(\Omega_1-1)| - 4 \cdot |X(\Omega_1)| + 2 \cdot |X(\Omega_1+1)|} - 1 \right] \tag{13}$$

We can derive the accurate point increment with maximum amplitude $\hat{\Omega}$ with equation (13), and obtain the frequency offset according to the accurate point with maximum amplitude $\Omega+\Omega_0$:

$$\hat{f}_e = \frac{f_s \cdot (\hat{\Omega}+\Omega_0 - M \cdot P/2)}{K \cdot M \cdot P} \tag{14}$$

In equation (13), quadratic interpolation is applied to obtain more accurate estimations. The proposed method has much lower complexity than traditional method using long FFT length directly. For example, for $P$=32, $K$ =16 and $N_s$=1024, in order to get the accuracy of 0.0625, $N_{FFT}$ have to be selected as 1024 for direct FFT, and this procedure entails $N_{FFT} \cdot \log_2(N_{FFT})/2$=5120 complex multiplications (20480 real multiplications) and $N_{FFT} \cdot \log_2(N_{FFT})$=10240 complex additions (20480 real additions). For proposed method, M have to be selected as 32, L = 128 and the result in (6) and (7) can be calculated in advance. The corresponding complexity is 32 multiplications in (8), 448 complex multiplications and 896 complex additions in (9), and 128 multiplications, 448 complex multiplications and 896 complex additions in (10), together, 32 multiplications in (11). Total complexity is 3776 real multiplications and 3548 real additions, which is much smaller than the traditional method.

According to the description of the concrete example above, the method proposed in this invention for carrier frequency synchronization in digital communication system comprises the following steps:

1) At the transmitter, a special PN sequence is inserted every a segment of communication signals digitally modulated and then is transmitted with the communication signals, and the special PN sequences are $C = R(v \otimes u)$ wherein R is constant, **u** and **v** are two PN sub sequences, and $\otimes$ represents the Kronecker product;

2) At the receiver, down converted base signals containing said special PN sequences are match filtered to output P complex signals containing frequency offset, wherein P corresponds to the length of said sub sequence **v**;

3) Transform the P complex signals into frequency domain by FFT using likelihood function and search in frequency domain for the coarse point $\Omega_0$ with max amplitude;

4) Search spectrum in the small range of $\Omega_0$-1 to $\Omega_0$+1 with more accuracy by Chirp-Z transform to obtain point increment information $\Omega_1$;

5) Find the point increment $\hat{\Omega}$ of the accurate point with maximum amplitude by quadratic interpolation upon the point increment information $\Omega_1$;

6) Calculate frequency offset with equation

$$\hat{f}_e = \frac{f_s \cdot (\hat{\Omega}+\Omega_0-M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**;

7) Use frequency offset $\hat{f}_e$ to control the high frequency oscillator, making it vary according to $\hat{f}_e$ to implement carrier frequency synchronization.

The following describes the structure of the transmitter and receiver to implement the method. Referring to the upper part in figure 1, the transmitter in digital communication system include digital modulator 1, which digitally modulates communication signals, and radio front end 2 to transmit these modulated signals, also comprising: PN sequence generator 3 to generates particular sequence $C=R(v \otimes u)$, wherein R is constant, v and u are two PN sub sequences and $\otimes$ represents the Kronecker product; multiplexer 4 between said digital modulator 1 and said radio front end 2, which inserts particular PN sequence C every several modulated communication signals.

In an embodiment, the digital communication may be an OFDM communication system. Accordingly digital modulator 1 is an OFDM modulator.

Referring to the lower part of figure 1e, the receiver in digital communication system comprises down converter 6 that down converts received signals, timing synchronizer 5 for the timing synchronization of the converted signals, and the high frequency oscillator 13 that generates high frequency oscillation for said down converter 6; also comprising:

The match filter 7 for down converted base band signals that contain particular PN sequence $C = R(v \otimes u)$, wherein R is constant, v and u are two PN sub sequences and $\otimes$ represents the Kronecker product; said match filter 7 outputs P complex signals containing the frequency offset, wherein P is the length of said sub sequence v; select R=1=j in an embodiment;

Calculation device 8 that transforms the P complex signals into frequency domain by FFT using likelihood function and search in frequency domain for the coarse point $\Omega_0$ with max amplitude;

Point increment information calculation device 9, which searches spectrum in the small range of $\Omega_0$-1 to $\Omega_0$+1 with more accuracy by Chirp-Z transform to find the point increment information $\Omega_1$;

Accurate point increment calculation device 10, which finds the point increment $\Omega$ of the accurate point with maximum amplitude by quadratic interpolation upon the point increment information $\Omega_1$;

Frequency offset calculation devicell which calculates frequency offset with equation

$$\hat{f}_e = \frac{f_s \cdot (\hat{\Omega} + \Omega_0 - M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**; said frequency offset calculation device 11 outputs frequency offset $f_e$ to control the high frequency oscillator 13, making it vary according to $f_e$ to implement carrier frequency synchronization.

In the device for calculating coarse point with max amplitude 8, likelihood function is defined as:

$$\Gamma(f_k) = \left| \sum_{l=0}^{N_{FFT}} d_l \cdot e^{-j2\pi \cdot l \cdot f_k \cdot K / f_s} \right|,$$

and can be calculated by Fast Fourier Transform (FFT) for discrete estimation; the frequency domain expression of said P complex signals derived therefrom is $\mathbf{y}=(y_0, y_1, \cdots, y_{NFFT-1})=FFT(d_0, d_1, \cdots d_{P-1}, 0, 0, \cdots 0)$, wherein FFT denotes Fast Fourier Transform, and $d_0 \square d_1, \ldots d_{P-1}$ are the P complex signals output by the match filter in step (2). The length of FFT is defined as $N_{FFT}$, which should be bigger than $P$, and other data after $N_{FFT}$-P can be zero padded.

In the device for calculating coarse point with maximum amplitude 8, select point information

$$\Omega = \arg \max_j \left| y_j \right|$$

and find the coarse point with max amplitude $\Omega_0$.

Divide the range from $\Omega_0$-1 to $\Omega_0$+1 into 2M pieces. Point increment information

$$\Omega_1 = \arg \max_k \left| X(k) \right|,$$

$0 \le k \le 2M$-1 can be got with Chirp-Z transform, wherein X(K) is the sequence function generated by Chirp-Z transform and M is the value set according to the resolution requirement.

The quadratic interpolation equation of accurate point increment calculation device 10 is

$$\hat{\Omega} = \Omega_1 + \left[ \frac{3 \cdot \left| X(\Omega_1 - 1) \right| - 4 \cdot \left| X(\Omega_1) \right| + \left| X(\Omega_1 + 1) \right|}{2 \cdot \left| X(\Omega_1 - 1) \right| - 4 \cdot \left| X(\Omega_1) \right| + 2 \cdot \left| X(\Omega_1 + 1) \right|} - 1 \right],$$

wherein $X(\Omega_1$-1)$\square X(\Omega_1) \square X(\Omega_1$+1)$\square X(\Omega_1$-1)$\square X(\Omega_1)$ and $X(\Omega_1$+1) are calculated with the sequence function $X(k)=V(k) \cdot W^{k2/2}$.

The output peak signal from match filer 7 is used as timing synchronization signal, and timing synchronizer 5 utilizes this signal for the timing synchronization of the base band signal output from down converter 6.

Loop filter 12, which is connected between the output of frequency offset calculation device 11 and the input of high frequency oscillator 13, will perform loop filter on the output frequency offset of from device 11.

This invention may be applied for frequency synchronization not only to OFDM system and WCDMA system, but also to any system that uses such PN sequences as time domain point signals.

The following shows the technical effect of this invention.

Here the simplified non-hilly urban channel model recommended in DAB (Digital Audio Broadcasting) test (pr EN 50248) is used for evaluate the following equation:

$$h(n) = 0.707\delta(n+2)+\delta(n)+0.707\delta(n\text{-}3) +0.5\delta(n\text{-}13)+0.4\delta(n\text{-}19)+0.31625\delta(n\text{-}44). \tag{15}$$

Parameters of the OFDM system are selected to be: OFDM symbol samples $N_s$=1024 (length of FFT), guard interval (CP) is $N_{cp}$=216, and PN sequence inserted ahead is selected the same as the PSC code in WCDMA, that is, length of two sub PN sequences are both16, $K=P$=16. The length of PN is $K \cdot P$=256. The performance with different M parameters of Chirp-z transform in multi-path fading channels is investigated by simulation.

Figure 3 shows curves of variance versus SNR for proposed algorithm with different M compared to differential algorithm in AWGN channel, in which the variance is the residual frequency variance. No accumulation is taken in this simulation. Relative frequency offset is set to be 1.3.

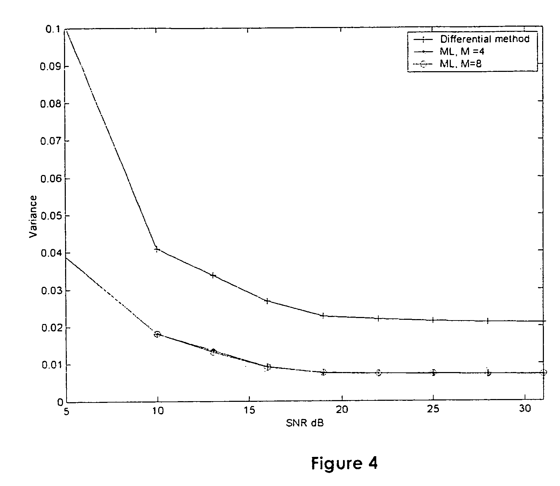

Figure 4 shows curves of variance versus SNR for proposed algorithm with different M compared to differential algorithm in multi-path fading channel with relative Doppler spread 0.2%, in which the variance is the residual frequency variance. No accumulation is taken in this simulation. Relative frequency offset is set to be 1.3.

The results in Fig 3, 4 show that in both in AWGN and multi-path environment the proposed algorithm achieves much better improvement compared to differential method.

In the simulation, the $K$=16 is small, however both algorithms (differential method and proposed method) will get better performance with bigger $K$, because these algorithms with bigger $K$ can suppress much more noise. Accumulation can debate the noise somewhat, but no accumulation is taken in this simulation. Meanwhile we use the largest peak for estimation, and better performance will be obtained if using more peaks in multi-path environment.

A detailed description of this invention combined with appended drawings is given above. Any various modifications may be implemented by those skilled in the field. Therefore some details of the embodiments should not be regarded as a limitation to the invention. Appended claims define the protected range of the invention.

## Claims

**1.**   A method for carrier frequency synchronization in digital communication system, comprising the following steps:

1) At the transmitter, a special PN sequence is inserted every a segment of communication signals digitally modulated and then is transmitted with the communication signals, and the special PN sequences are $C=R$ ($v \otimes u$) wherein R is constant, **u** and **v** are two PN sub sequences, and $\otimes$ represents the Kronecker product;

2) At the receiver, down converted base band signals containing said special PN sequences are match filtered to output P complex signals containing frequency offset, wherein P corresponds to the length of said sub sequence **v**;

3) Transform the P complex signals into frequency domain by FFT using likelihood function and search in frequency domain for the coarse point $\Omega_0$ with max amplitude;

4) Search spectrum in the small range of $\Omega_0$-1 to $\Omega_0$+1 with more accuracy by Chirp-Z transform to obtain point increment information $\Omega_1$;

5) Find the point increment $\Omega$ of the accurate point with maximum amplitude by quadratic interpolation upon the point increment information $\Omega_1$;

6) Calculate a frequency offset with equation

$$\hat{f}_e = \frac{f_s \cdot (\hat{\Omega} + \Omega_0 - M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**;

7) Use the frequency offset $f_e$ to control a high frequency oscillator, making it vary according to $f_e$ to implement carrier frequency synchronization.

**2.**   The method according to claim 1, wherein likelihood function in step (3) is defined as:

$$\Gamma(\varepsilon_k) = \left| \sum_{l=0}^{N_{FFT}} d_l \cdot e^{-j 2 \pi \cdot l \cdot \varepsilon_k \cdot K / N_s} \right|,$$

and can be calculated by Fast Fourier Transform (FFT) for discrete estimation, then obtaining that the frequency domain expression of said P complex signals in step (2) is derived as $\mathbf{y}=(y_0, y_1, \cdots, y_{N_{FFT}-1})=FFT(d_0, d_1, \cdots d_{P-1}, 0, 0, \cdots 0)$, wherein FFT denotes Fast Fourier Transform, and $d_0 \square d_1, \ldots d_{P-1}$ are the P complex signals output by the match filter, and the length of FFT is defined as $N_{FFT}$, which should be bigger than $P$, and other data after $N_{FFT}$-P can be zero padded.

3. The method according to claim 2, wherein in step (3), point information is taken as

$$\Omega = \arg \underset{j}{m\,a\,x} \mid y_{j} \mid$$

and find the coarse point $\Omega_0$ with maximum amplitude from it.

4. The method according to claim 1 or 3, wherein in step (4) the range from $\Omega_0$ -1 to $\Omega_0$ + 1 was divided into 2M pieces, and point increment information

$$\Omega_1 = \arg \underset{k}{\max} \bigl| X(k) \bigr|, \quad 0 \le k \le 2M - 1$$

can be got with Chirp-Z transform, wherein X(K) is the sequence function generated by Chirp-Z transform and M is the value set according to the resolution requirement.

5. The method according to claim 4, wherein the quadratic interpolation equation of step (5) is

$$\hat{\Omega} = \Omega_1 + \left[ \frac{3 \cdot \bigl| X(\Omega_1 - 1) \bigr| - 4 \cdot \bigl| X(\Omega_1) \bigr| + \bigl| X(\Omega_1 + 1) \bigr|}{2 \cdot \bigl| X(\Omega_1 - 1) \bigr| - 4 \cdot \bigl| X(\Omega_1) \bigr| + 2 \cdot \bigl| X(\Omega_1 + 1) \bigr|} - 1 \right],$$

wherein $X(\Omega_1\text{-}1)\square X(\Omega_1)\square X(\Omega_1+1)\square X(\Omega_1\text{-}1)\square X(\Omega_1)$ and $X(\Omega_1+1)$ are calculated with the sequence function $X(k) = V(k) \cdot W^{k2/\,2}$.

6. The method according to claim 5, wherein R=1+j.

7. A transmitter in digital communication system with digital modulator to digitally modulates communication signals and radio front end to transmit these modulated signals, further comprising: PN sequence generator to generates particular sequence $C = R(v \otimes u)$, wherein R is constant, v and u are two PN sub sequences and $\otimes$ represents the Kronecker product; multiplexer between said digital modulator and said radio front end, which inserts particular PN sequence C every several modulated communication signals.

8. The transmitter according to claim 7, wherein R=1+j.

9. The transmitter according to claim 7 or 8, wherein said digital communication system is an OFDM communication system and said digital modulator is an OFDM modulator.

10. A receiver in digital communication system, including down converter that down converts received signals, timing synchronizer for the timing synchronization of the converted signals, and the high frequency oscillator that generates high frequency oscillation for said down converter; also comprising: The match filter for match filtering down converted base band signals containing particular PN sequence $C = R(v \otimes u)$, wherein R is constant, v and u are two PN sub sequences and $\otimes$ represents the Kronecker product; said match filter outputs P complex signals containing the frequency offset, wherein P is the length of said sub sequence v; calculation device that transforms the P complex signals into frequency domain by FFT using likelihood function and then search in frequency domain for the coarse point $\Omega_0$ with max amplitude; point increment information calculation device, which searches spectrum in the small range of $\Omega_0$-1 to $\Omega_0$+1 with more accuracy by Chirp-Z transform to find the point increment information $\Omega_1$; accurate point increment calculation device, which finds the point increment $\Omega$ of the accurate point with maximum amplitude by quadratic interpolation upon the point increment information $\Omega_1$; frequency offset calculation device which calculates frequency offset with equation

$$\hat{f}_e = \frac{f_s \cdot (\Omega + \Omega_0 - M \cdot P/2)}{K \cdot M \cdot P},$$

wherein $f_s$ is the chip rate of the PN sequence, M is the number of segments that the range from $\Omega_0$-1 to $\Omega_0$+1 are divided into, P is the length of said sub sequence **v** while K is that of said sub sequence **u**; said frequency offset calculation device outputs frequency offset $f_e$ to control the high frequency oscillator, making it vary according to $f_e$ to implement carrier frequency synchronization.

**11.** The receiver according to claim 10, wherein likelihood function is defined as

$$\Gamma(\varepsilon_k) = \left| \sum_{l=0}^{N_{FFT}} d_l \cdot e^{-j 2\pi \cdot l \cdot \varepsilon_k \cdot K / N_s} \right|$$

in the device for calculating coarse point with maximum amplitude, and can be calculated by Fast Fourier Transform (FFT) for discrete estimation; the frequency domain expression of said P complex signals derived therefrom is **y** = $(y_0, y_1, \cdots y_{N_{FFT}-1})$ = $FFT(d_0, d_1, \cdots d_{P-1}, 0, 0, \cdots 0)$, where FFT denotes Fast Fourier Transform, and $d_0 \square d_1$, ...$d_{P-1}$ are the P complex signals output by the match filter in step (2) and the length of FFT is defined as $N_{FFT}$, which should be bigger than $P$, and other data after $N_{FFT}$-$P$ can be zero padded.

**12.** The receiver according to claim 11, wherein point information is selected to be

$$\Omega = \arg \max_j | y_j |$$

in the device for calculating coarse point with maximum amplitude, and the coarse point $\Omega_0$ with maximum amplitude is found from it.

**13.** The receiver according to claim 12, wherein in the point increment information calculation device, the range from $\Omega_0$-1 to $\Omega_0$+1was divided into 2M pieces, and point increment information

$$\Omega_1 = \arg \max_k |X(k)|,$$

$0 \leq k \leq 2M - 1$ can be got with Chirp-Z transform, wherein X(K) is the sequence function generated by Chirp-Z transform and M is the value set according to the resolution requirement.

**14.** The receiver according to claim 13, wherein the quadratic interpolation equation of the accurate point increment calculation device for is:

$$\texttt{point increment } \hat{\Omega} = \Omega_1 + \left[ \frac{3 \cdot |X(\Omega_1 - 1)| - 4 \cdot |X(\Omega_1)| + |X(\Omega_1 + 1)|}{2 \cdot |X(\Omega_1 - 1)| - 4 \cdot |X(\Omega_1)| + 2 \cdot |X(\Omega_1 + 1)|} - 1 \right],$$

wherein $X(\Omega_1$-1$)\square X(\Omega_1)\square X(\Omega_1$+1$)\square X(\Omega_1$-1$)\square X(\Omega_1,)$ and X($\Omega_1$+1) are calculated with the sequence function

$$X(k) = V(k) \cdot W^{k^2/2}.$$

**15.** The receiver according to claim 1 or 14, wherein R=1+j.

**16.** The receiver according to claim 10, wherein said match filter also outputs peak signal serving as timing synchronization signal and said timing synchronizer use this signal for the timing synchronization of the base band signal output by the down converter.

17. The receiver according to claim 10, wherein there is a loop filter connected between the output of said frequency offset calculation device and the input of said high frequency oscillator, performing loop filter upon the frequency offset output from the frequency offset calculation device.

Transmitter

Communication
Signal → Digital Modulator 1 → multiplexer 4 → Radio Front End 2 → Transmitted Signal

PN Sequence Generator 3

Receiver

Timing Synchronizer 5 → Down Converter 6 ← Received Signal

Timing Synchronization Signal

Match Filter 7

P Complex Signals Containing Frequency Offset Information

Device for calculating coarse point with maximun amplitude 8

High Frequency Oscillator 13

Point Increment Information Calculation Device 9

Loop Filter 12

Accurate Point Increment Calculation Device 10 → Frequency Offset Calculation Device 11

P

**Figure 1**

Figure 2

Figure 3

Figure 4

EP 1 441 463 A1

European Patent Office

**EUROPEAN SEARCH REPORT**

Application Number

EP 03 02 9653

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98/19390 A (STANFORD TELECOMM INC) 7 May 1998 (1998-05-07) * abstract * * page 3, line 20-30 * * page 1, line 11-15; figure 8 * --- | 7-9 | H04L7/04 |
| X | WO 00/67404 A (RAAF BERNHARD ;MICHEL JUERGEN (DE); SIEMENS AG (DE)) 9 November 2000 (2000-11-09) * abstract; figure 5 * * page 30, line 5-9 * * page 8, line 9-21 * * page 9, line 1-15 * --- | 7-9 | |
| A | EP 0 665 665 A (THOMSON CSF) 2 August 1995 (1995-08-02) * abstract; figure 5 * * page 10, line 3 - page 11, line 40; figure 7 * --- | 1-17 | |
| A | WO 01/17189 A (TACHYON INC) 8 March 2001 (2001-03-08) * page 5, line 24-27; figure 3 * * page 7, line 1-3 * ----- | 1-6, 10-17 | TECHNICAL FIELDS SEARCHED (Int.Cl.7) H04L |

The present search report has been drawn up for all claims

| Place of search | Date of completion of the search | Examiner |
|---|---|---|
| MUNICH | 30 April 2004 | Horbach, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 03 02 9653

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2004

| Patent document cited in search report | | Publication date | Patent family member(s) | | Publication date |
|---|---|---|---|---|---|
| WO 9819390 | A | 07-05-1998 | US | 6049576 A | 11-04-2000 |
| | | | AU | 5086098 A | 22-05-1998 |
| | | | BR | 9712698 A | 26-10-1999 |
| | | | CA | 2268854 A1 | 07-05-1998 |
| | | | EP | 0938775 A1 | 01-09-1999 |
| | | | JP | 2001519977 T | 23-10-2001 |
| | | | WO | 9819390 A1 | 07-05-1998 |
| WO 0067404 | A | 09-11-2000 | DE | 19919545 A1 | 02-11-2000 |
| | | | AU | 3804300 A | 17-11-2000 |
| | | | BR | 0010601 A | 05-02-2002 |
| | | | CN | 1349690 T | 15-05-2002 |
| | | | CN | 1349691 T | 15-05-2002 |
| | | | WO | 0067404 A1 | 09-11-2000 |
| | | | WO | 0067405 A1 | 09-11-2000 |
| | | | EP | 1173943 A1 | 23-01-2002 |
| | | | EP | 1173944 A1 | 23-01-2002 |
| | | | HU | 0200967 A2 | 29-07-2002 |
| | | | HU | 0200968 A2 | 29-07-2002 |
| | | | JP | 2002543741 T | 17-12-2002 |
| | | | JP | 2002543742 T | 17-12-2002 |
| EP 0665665 | A | 02-08-1995 | FR | 2715488 A1 | 28-07-1995 |
| | | | DE | 69520895 D1 | 21-06-2001 |
| | | | DE | 69520895 T2 | 27-09-2001 |
| | | | EP | 0665665 A1 | 02-08-1995 |
| | | | NO | 952033 A | 27-11-1995 |
| | | | US | 5812090 A | 22-09-1998 |
| WO 0117189 | A | 08-03-2001 | US | 6218896 B1 | 17-04-2001 |
| | | | AU | 6800900 A | 26-03-2001 |
| | | | AU | 6889700 A | 26-03-2001 |
| | | | AU | 6933800 A | 26-03-2001 |
| | | | AU | 6934000 A | 26-03-2001 |
| | | | AU | 6936300 A | 26-03-2001 |
| | | | AU | 7072300 A | 26-03-2001 |
| | | | CA | 2384303 A1 | 08-03-2001 |
| | | | CA | 2386744 A1 | 08-03-2001 |
| | | | CA | 2386745 A1 | 08-03-2001 |
| | | | CA | 2386766 A1 | 08-03-2001 |
| | | | CN | 1385019 T | 11-12-2002 |
| | | | CN | 1421074 T | 28-05-2003 |
| | | | CN | 1385048 T | 11-12-2002 |
| | | | CN | 1385000 T | 11-12-2002 |
| | | | EP | 1212874 A1 | 12-06-2002 |
| | | | EP | 1219130 A1 | 03-07-2002 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 03 02 9653

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2004

| Patent document cited in search report | Publication date | Patent family member(s) | Publication date |
|---|---|---|---|
| WO 0117189 A | | EP 1221199 A1 | 10-07-2002 |
| | | EP 1212849 A2 | 12-06-2002 |
| | | JP 2003524943 T | 19-08-2003 |
| | | JP 2003529961 T | 07-10-2003 |
| | | JP 2003508970 T | 04-03-2003 |
| | | JP 2003508992 T | 04-03-2003 |
| | | WO 0117171 A1 | 08-03-2001 |
| | | WO 0116744 A1 | 08-03-2001 |
| | | WO 0117311 A1 | 08-03-2001 |
| | | WO 0117117 A2 | 08-03-2001 |
| | | WO 0117110 A1 | 08-03-2001 |
| | | WO 0117189 A1 | 08-03-2001 |
| | | US 6463070 B1 | 08-10-2002 |
| | | US 6532220 B1 | 11-03-2003 |
| | | US 6684059 B1 | 27-01-2004 |
| | | US 6674731 B1 | 06-01-2004 |
| | | US 6650636 B1 | 18-11-2003 |
| | | US 6665292 B1 | 16-12-2003 |

EPO FORM P0459

For more details about this annex : see Official Journal of the European Patent Office, No. 12/82